# EUROPEAN PATENT APPLICATION

(11) **EP 4 699 432 A1**
(43) Date of publication of application: **25.02.2026**
(21) Application number: 25158601.2
(22) Date of filing: 18.02.2025
(51) Int. Cl.: A01D 41/127, B60K 26/02, G05D 1/22, G05D 1/227, B60L 3/12, B60L 15/20, A01B 79/00

(54) **WORK VEHICLE**

(30) Priority: 08.03.2024 JP 2024036082
(71) Applicant: Yanmar Holdings Co., Ltd., Osaka-shi, Osaka (JP)
(72) Inventor: KODAMA, Maroi, Okayama (JP); SUZUKI, Shogo, Okayama (JP); ISHIDA, Tomoki, Okayama (JP)
(74) Representative: Novagraaf International SA

(57) **Abstract**

[Problem] To provide a technique capable of easily moving a traveling machine body in both a state where the traveling machine body may be operated by a remote operation device and a state where the traveling machine body may not be operated by the remote operation device.

[Solution] A work vehicle includes a traveling machine body, an in-vehicle operation device that is installed in the traveling machine body and that operates the traveling machine body, and a remote operation device that is provided separately from the traveling machine body and that operates the traveling machine body. The work vehicle has a first operation mode for operating the traveling machine body using the remote operation device and a second operation mode for operating the traveling machine body using the in-vehicle operation device.

## Description

### TECHNICAL FIELD

The present invention relates to a work vehicle.

### BACKGROUND ART

A mowing machine that includes a traveling machine body that performs mowing traveling and can be manually operated using a transmitter (remote operation device) is known as a conventional technique (for example, see Patent Document 1).

### PRIOR ART DOCUMENT

### PATENT DOCUMENT

Patent Document 1: Japanese Unexamined Patent Application Publication No. 2019-106941

### SUMMARY OF INVENTION

### TECHNICAL PROBLEM

In the configuration in Patent Document 1, when the remote operation device is normal, the traveling machine body is operated (particularly, moved to travel) by using the remote operation device so as to be easily moved. However, for example, when a failure or a shortage of power occurs in the remote operation device, the traveling machine body may not be operated by the remote operation device, and therefore, the traveling machine body may not be moved. In this case, in order to move the traveling machine body, for example, it is necessary to prepare a device different from the traveling machine body and lift the traveling machine body, and therefore, it is difficult to move the traveling machine body.

The present invention has been made to solve the above problem, and an object of the present invention is to provide a technique capable of easily moving a traveling machine body in both a state in which the traveling machine body may be operated by a remote operation device and a state in which the traveling machine body may not be operated by the remote operation device.

### SOLUTION TO PROBLEM

According to an aspect of the present invention, a work vehicle includes a traveling machine body, an in-vehicle operation device that is installed in the traveling machine body and that operates the traveling machine body, and a remote operation device that is provided separately from the traveling machine body and that operates the traveling machine body. The work vehicle has a first operation mode for operating the traveling machine body using the remote operation device and a second operation mode for operating the traveling machine body using the in-vehicle operation device.

### ADVANTAGEOUS EFFECTS OF INVENTION

With the configuration described above, the traveling machine body can be easily moved in both a state in which the traveling machine body may be operated by the remote operation device and a state in which the traveling machine body may not be operated by the remote operation device.

### BRIEF DESCRIPTION OF DRAWINGS

FIG. 1 is a diagram schematically illustrating a configuration of a work vehicle according to an embodiment of the present invention.
FIG. 2 is a block diagram schematically illustrating a configuration of a work machine lifting device installed in a traveling machine body included in the work vehicle.
FIG. 3 is a plan view illustrating a configuration of a remote operation device for the work vehicle.
FIG. 4 is a perspective view illustrating a configuration of an in-vehicle operation device installed in the traveling machine body.
FIG. 5 is a diagram illustrating a configuration of a switching manipulator installed in the in-vehicle operation device.
FIG. 6 is a diagram illustrating a configuration of the switching manipulator.
FIG. 7 is a block diagram schematically illustrating a configuration of a control system of the work vehicle.
FIG. 8 is an explanatory view illustrating an operation of the traveling machine body in a first operation mode of the work vehicle.
FIG. 9 is an explanatory view illustrating an operation of the traveling machine body in a second operation mode of the work vehicle.
FIG. 10 is a flowchart of a flow when an operation instruction is issued by the remote operation device in the second operation mode.
FIG. 11 is a graph illustrating a change in a target speed of the traveling machine body in the second operation mode with respect to an operation amount of a forward movement operation button of the in-vehicle operation device.
FIG. 12 is a flowchart of a flow of a setting of switching from the first operation mode to the second operation mode.
FIG. 13 is a flowchart of a flow of notification by a notifier installed in the traveling machine body.

### DESCRIPTION OF EMBODIMENTS

Embodiments of the present invention will be described below with reference to the drawings.

### 1. Schematic Configuration of Work Vehicle

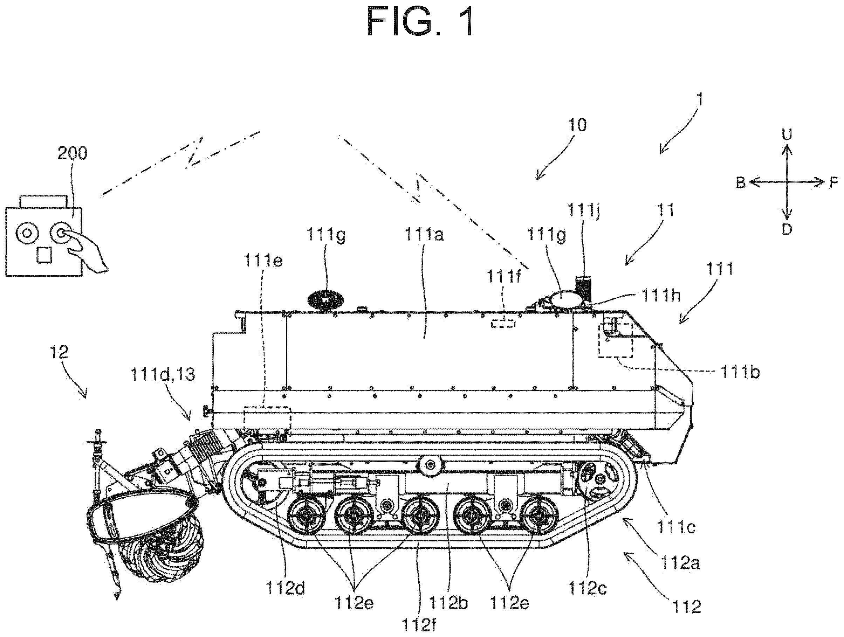

FIG. 1 is a diagram schematically illustrating a configuration of a work vehicle 1 according to an embodiment of the present invention. The work vehicle 1 is used to perform work, such as agricultural work and construction work. The work vehicle 1 includes a vehicle main body 10 and a remote operation device 200. The vehicle main body 10 includes a traveling machine body 11 that travels on the ground, and a work machine 12 that is coupled to the traveling machine body 11. That is, the work vehicle 1 includes the traveling machine body 11 and the work machine 12.

The remote operation device 200 (also referred to as a remote control device) is provided separately from the vehicle main body 10 and enables an operator at a position away from the vehicle main body 10 to operate the vehicle main body 10, in particular, the traveling machine body 11. Specifically, the work vehicle 1 includes the remote operation device 200, and the remote operation device 200 is provided separately from the traveling machine body 11 and operates the traveling machine body 11. A configuration of the remote operation device 200 will be described below. Furthermore, traveling of the traveling machine body 11 operated by the remote operation device 200, that is, manually operated by an operator is referred to as manual traveling.

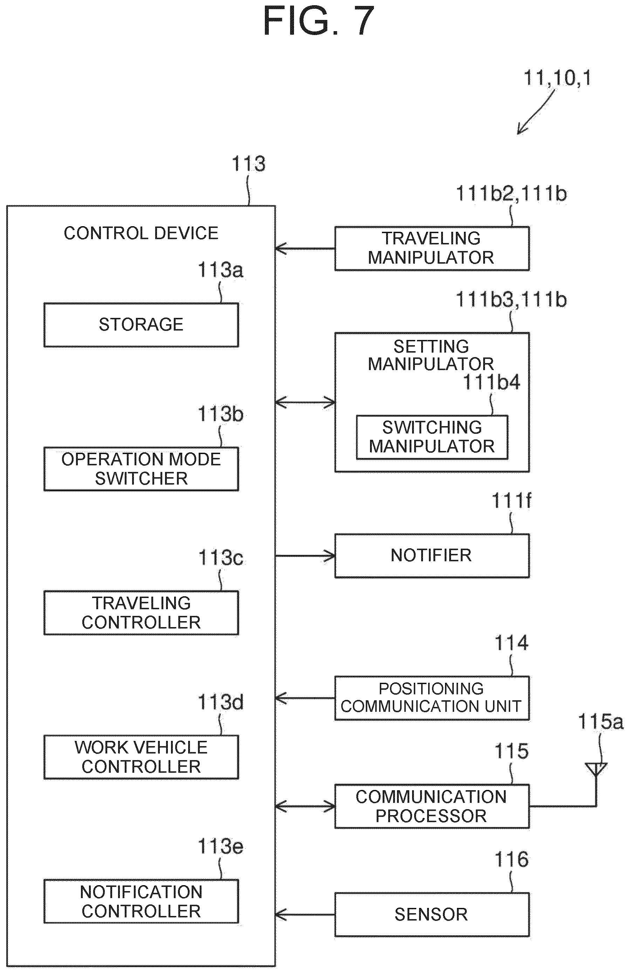

The work vehicle 1 is configured to be able to travel by automatic traveling in addition to the manual traveling described above. The above-described automatic traveling means that at least steering is autonomously performed along a predetermined route by controlling a device related to traveling (for example, a traveling drive device 111c described later) by a control device 113 (see FIG. 7) described later included in the work vehicle 1. Note that the automatic traveling may be configured such that, in addition to steering, for example, at least one of adjustment of a traveling speed (also simply referred to as a speed) and work by the work machine 12 is autonomously performed. In addition, the work vehicle 1 is not limited to the above-described configuration, and for example, may be capable of manual traveling and incapable of automatic traveling.

Here, directions used in the description (in particular, directions related to the vehicle main body 10) are defined as follows. A direction in which the traveling machine body 11 and the work machine 12 are arranged in parallel is referred to as a front-back direction, a direction in which the work machine 12 is located when viewed from the traveling machine body 11 is referred to as "back", and an opposite direction is referred to as "front". Moreover, a right side and a left side from the back side toward the front side are defined as "right" and "left", respectively. Furthermore, a gravity direction perpendicular to the front-back direction and the right-left direction is defined as an up-down direction, and an upstream side and a downstream side in the gravity direction are defined as "up" and "down", respectively. In the drawings, the front side, the back side, the right side, the left side, the upside, and the downside are denoted by the symbols "F", "B", "R", "L", "U", and "D", respectively, as necessary. Note that, these directions are names used merely for the explanation and are not intended to limit actual positional relations or directions.

Note that, in this embodiment, the work machine 12 is disposed behind the traveling machine body 11, but the present invention can also be applied to a work vehicle 1 in which the work machine 12 is disposed in front of the traveling machine body 11.

The traveling machine body 11 includes a machine body portion 111 and a traveling portion 112 disposed below the machine body portion 111. The machine body portion 111 includes an outer cover 111a, an in-vehicle operation device 111b and the traveling drive device 111c which are disposed on an inner front side covered by the outer cover 111a, and a work machine drive device 111d and a work machine lifting device 111e which are disposed on an inner back side covered by the outer cover 111a. Specifically, the work vehicle 1 includes the in-vehicle operation device 111b, and the in-vehicle operation device 111b is installed in the traveling machine body 11.

The in-vehicle operation device 111b enables the operator to operate the traveling machine body 11. That is, the in-vehicle operation device 111b operates the traveling machine body 11. In addition, the in-vehicle operation device 111b enables various settings of the work vehicle 1 (the traveling machine body 11, the work machine 12, and the remote operation device 200). A configuration of the in-vehicle operation device 111b will be described below.

Note that, in this embodiment, the work vehicle 1 has a first operation mode and a second operation mode as operation modes. In the first operation mode, the traveling machine body 11 is operated (for example, the traveling machine body 11 is moved to travel) using the remote operation device 200. In the second operation mode, the traveling machine body 11 is operated (for example, the traveling machine body 11 is moved to travel) using the in-vehicle operation device 111b. The operations of the traveling machine body 11 in the individual operation modes will be described in detail below.

The traveling drive device 111c includes a drive source and a power transmission portion (not illustrated) that transmits power from the drive source to the traveling portion 112. In this embodiment, the drive source included in the traveling drive device 111c is an electric motor. Note that the drive source included in the traveling drive device 111c may be other than the electric motor, and may be, for example, an engine.

The work machine drive device 111d includes a drive source and a power take off (PTO) power transmission portion (not illustrated) that can transmit power from the drive source to an outside of the traveling machine body 11. In this embodiment, the drive source included in the work machine drive device 111d is an electric motor. Note that the drive source included in the work machine drive device 111d may be other than the electric motor, and may be, for example, an engine.

Furthermore, in this embodiment, although the drive source included in the traveling drive device 111c and the drive source included in the work machine drive device 111d are different from each other, a drive source (electric motor) may be shared by the traveling drive device 111c and the work machine drive device 111d. Note that a configuration of the work machine lifting device 111e will be described later.

A notifier 111f is further disposed inside the outer cover 111a, in particular, on an upper side of the inside. That is, the work vehicle 1 includes the notifier 111f. In this embodiment, the notifier 111f is a speaker. Note that the notifier 111f is not limited to the speaker, and may be, for example, a buzzer or a visual notifier. Examples of the visual notifier include a lamp using an incandescent lamp as a light source, a lamp using a light emitting diode (LED) as a light source, a liquid crystal display device, and an organic EL display device. Furthermore, an arrangement position of the notifier 111f is not limited to the above, and may be, for example, outside the outer cover 111a. Note that a time point (timing) when the notifier 111f performs notification will be described later.

In addition, a battery that supplies electric power to the electric motor, a power electronics device (both not illustrated), and the like are disposed inside the outer cover 111a. As an example, a light 111g, a positioning antenna 111h, an alarm lamp 111j, and the like are disposed outside the outer cover 111a.

The traveling portion 112 supports the machine body portion 111 in a traveling available manner. Specifically, the traveling portion 112 includes a pair of right and left crawlers 112a. The right and left crawlers 112a include respective track frames 112b extending in the front-back direction. The individual track frames 112b are attached to a lower surface of the machine body portion 111. The track frames 112b have respective drive sprockets 112c arranged as drive wheels at respective front ends of the track frames 112b. Power from the electric motor is transmitted to the drive sprockets 112c via a power transmitter included in the traveling drive device 111c. Driven sprockets 112d are arranged as driven wheels at respective back ends of the track frames 112b. The driven sprockets 112d are rotatably supported by the track frames 112b. In each of the track frames 112b, a plurality of rolling wheels 112e are rotatably supported between the drive sprocket 112c and the driven sprocket 112d. To form each of the crawlers 112a, a crawler belt 112f is wound around the drive sprocket 112c, the driven sprocket 112d, and the plurality of rolling wheels 112e.

The right and left crawlers 112a are driven by different electric motors included in the traveling drive device 111c. When the pair of right and left crawlers 112a are simultaneously driven in the same direction, the traveling portion 112 travels straight forward or backward. Whether the traveling portion 112 travels straight forward or backward depends on a rotation direction of the electric motors. For example, when the pair of right and left crawlers 112a are independently driven, the traveling portion 112 turns right or turns left.

Note that, in this embodiment, each of the crawlers 112a is configured such that one drive wheel (drive sprocket 112c) and one driven wheel (driven sprocket 112d) are arranged side by side in the front-back direction and the crawler belt 112f is wound around the drive wheel and the driven wheel. However, another configuration may be employed. For example, the crawlers may be of a type in which a crawler belt is wound around one drive wheel and two driven wheels in a triangular shape. Moreover, in this embodiment, the traveling portion 112 is of a crawler type, but may be of a type other than the crawler type, for example, a wheel type.

The work machine 12 is attached to the traveling machine body 11 via a hitch portion 13 in a lifting available manner. The hitch portion 13 includes the work machine drive device 111d. The work machine 12 is attached to the hitch portion 13 so as to be replaceable. That is, various types of the work machine 12 may be attached. In FIG. 1, the work machine 12 is a tiller. The work machine 12 may be, for example, a plow, a ridging device, a fertilizing device, an agricultural chemical spraying device, a harvesting device, a reaping device, a snow removal device, or the like, in addition to a tiller.

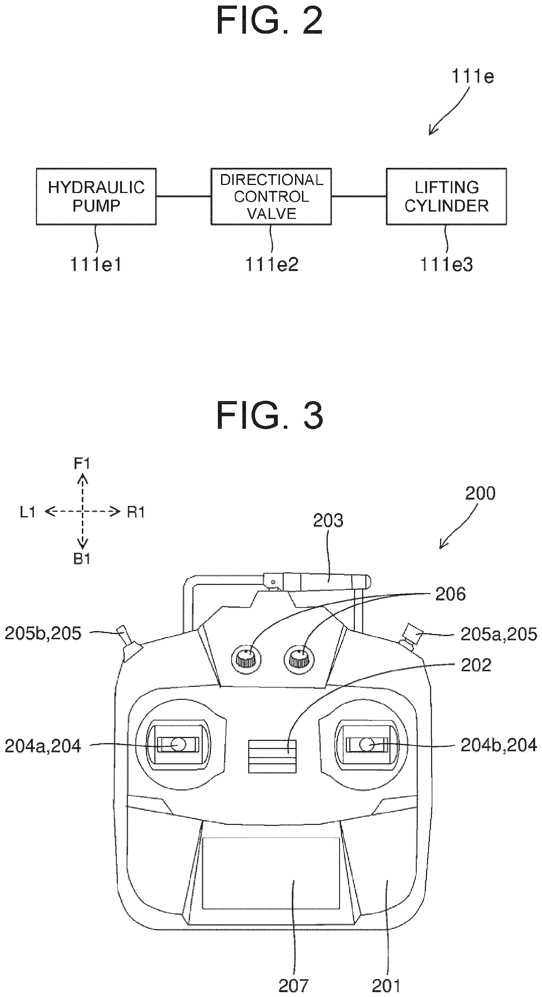

Here, a configuration of the work machine lifting device 111e will be described with reference to FIG. 2. FIG. 2 is a block diagram schematically illustrating a configuration of the work machine lifting device 111e. The work machine lifting device 111e includes a hydraulic pump 111e1, a directional control valve 111e2, and a lifting cylinder 111e3.

In this embodiment, the hydraulic pump 111e1 is an electric hydraulic pump that incorporates an electric motor (not illustrated) and is driven by the electric motor. Note that, in this embodiment, the hydraulic pump 111e1 is driven when an instruction for lifting or lowering the work machine 12 is issued. Therefore, when the instruction for lifting or lowering the work machine 12 is not issued, the hydraulic pump 111e1 is stopped. Furthermore, the hydraulic pump 111e1 is not limited to an electric pump. For example, the hydraulic pump 111e1 may be configured to have an engine disposed separately from the hydraulic pump 111e1 as a drive source and be driven by power output from the engine.

The hydraulic pump 111e1 is connected to a hydraulic oil tank (not illustrated) that stores hydraulic oil. When the hydraulic pump 111e1 is driven, hydraulic oil in the hydraulic oil tank is supplied to the lifting cylinder 111e3 via the directional control valve 111e2. The directional control valve 111e2 controls a flow direction and a flow rate of the hydraulic oil supplied to the lifting cylinder 111e3.

The lifting cylinder 111e3 is constituted by a hydraulic cylinder in this embodiment. More specifically, a base end portion of the lifting cylinder 111e3 is coupled to the machine body portion 111, and a tip end portion thereof is connected to the hitch portion 13. When the lifting cylinder 111e3 expands or contracts, the hitch portion 13 turns in the up-down direction with respect to the traveling machine body 11. As described above, the work machine 12 is attached to the hitch portion 13. Therefore, the work machine 12 can be moved in the up-down direction by expansion and contraction of the lifting cylinder 111e3. The lifting cylinder 111e3 is not limited to the above-described configuration, and may be, for example, an electric cylinder.

### 2. Configuration of Remote Operation Device

A configuration of the remote operation device 200 will be described with reference to FIG. 3. FIG. 3 is a plan view illustrating a configuration of the remote operation device 200. The remote operation device 200 includes a housing 201, a power switch 202, an antenna 203, operation levers 204, operation switches 205, operation knobs 206, and a display 207.

The housing 201 configures a main body portion of the remote operation device 200. The power switch 202, the antenna 203, the operation levers 204, the operation switches 205, the operation knobs 206, and the display 207 described above are individually mounted on appropriate portions of the housing 201. Note that the arrangement illustrated in FIG. 3 is merely an example and may be changed appropriately.

The power switch 202 is disposed at a center of a front surface of the housing 201, and enables turning on and off of the power of the remote operation device 200. The power switch 202 is, for example, a seesaw switch. Note that a power source of the remote operation device 200 is, for example, a battery, a dry cell, or the like disposed in the housing 201.

The antenna 203 protrudes from a side surface (side surface on an upper side in FIG. 3) of the housing 201 and enables wireless communication with the traveling machine body 11. When the power source of the remote operation device 200 is turned on by the power switch 202, the remote operation device 200 can perform wireless communication with the traveling machine body 11. When the power of the remote operation device 200 is turned off by the power switch 202, the remote operation device 200 may not communicate with the traveling machine body 11. In this embodiment, when the traveling machine body 11 may not communicate with the remote operation device 200, the traveling machine body 11 automatically stops traveling. That is, the power switch 202 has a function as an emergency stop switch of the traveling machine body 11.

Note that the emergency stop switch may be provided separately from the power switch 202.

The operation levers 204 include a first operation lever 204a and a second operation lever 204b arranged side by side with the power switch 202 interposed therebetween. The first operation lever 204a (the left-side lever illustrated in FIG. 3) can be pulled down at least in two directions (F1-B1 direction and L1-R1 direction) orthogonal to each other, which are indicated by broken arrows in FIG. 3. Furthermore, the first operation lever 204a may be pulled down in one direction in the L1-R1 direction while being pulled down in one direction in the F1-B1 direction. Note that the second operation lever 204b (the right-side lever illustrated in FIG. 3) can also be pulled down in the same directions as the first operation lever 204a. Functions of the first operation lever 204a and the second operation lever 204b will be described below.

The operation switches 205 include a first operation switch 205a and a second operation switch 205b. The first operation switch 205a is disposed on a side surface (a side surface on an upper right side in FIG. 3) of the housing 201. The first operation switch 205a is, for example, a momentary switch that can be pressed down. The second operation switch 205b is disposed on a side surface (a side surface on an upper left side in FIG. 3) of the housing 201. The second operation switch 205b is a toggle switch, for example. Functions of the first operation switch 205a and the second operation switch 205b will be described later.

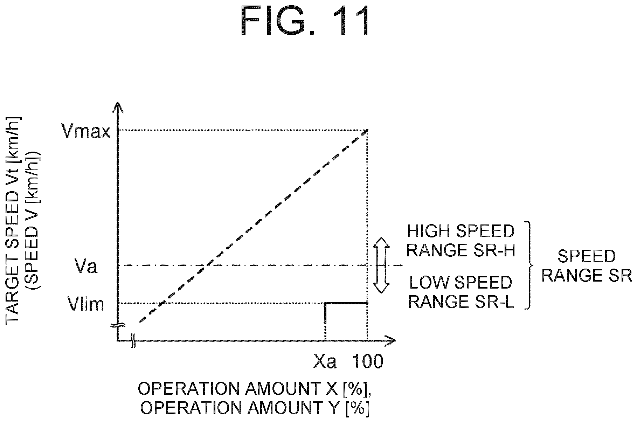

The operation knobs 206 are disposed on the front surface (an upper side of the front surface in FIG. 3) of the housing 201, and enable adjustment of a maximum speed Vmax (see FIG. 11) of the traveling machine body 11. Specifically, two operation knobs 206 are disposed. One of the two operation knobs 206 enables adjustment of the maximum speed Vmax of the traveling machine body 11 during straight traveling. The other of the two operation knobs 206 enables adjustment of the maximum speed Vmax of the traveling machine body 11 during turning traveling.

The display 207 is disposed on the front surface (a lower side of the front surface in FIG. 3) of the housing 201 and displays various types of information as notifications for an operator. The various types of information include, for example, a display of a speed V (see FIG. 11) of the traveling machine body 11. The display 207 is, for example, a liquid crystal display device, an organic EL display device, or the like.

### 3. Configuration of In-Vehicle Operation Device

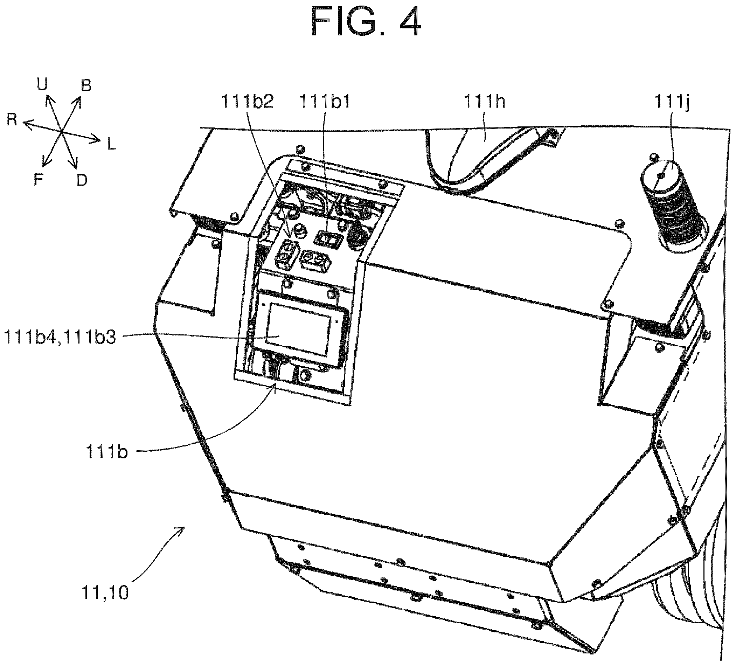

A configuration of the in-vehicle operation device 111b will be described with reference to FIG. 4. FIG. 4 is a perspective view illustrating a configuration of the in-vehicle operation device 111b. Note that, in FIG. 4, for convenience, a portion of the outer cover 111a located over the in-vehicle operation device 111b is not illustrated.

As described above, the in-vehicle operation device 111b is disposed on an inner front side covered by the outer cover 111a (see also FIG. 1). That is, the in-vehicle operation device 111b is disposed on a front side of the traveling machine body 11. That is, the in-vehicle operation device 111b is disposed on one side (the front side in this embodiment) in one direction (the front-back direction in this embodiment) included in the horizontal direction in the traveling machine body 11. Note that an arrangement position of the in-vehicle operation device 111b is not limited to the above. For example, the in-vehicle operation device 111b may be disposed on the back side of the traveling machine body 11, or may be disposed on any one of the right side and the left side of the traveling machine body 11. Specifically, the one direction only needs to be included in the horizontal direction, and may be the right-left direction.

The in-vehicle operation device 111b includes a light switch 111b1, a traveling manipulator 111b2, and a setting manipulator 111b3.

The light switch 111b1 is disposed on an upper back side of the in-vehicle operation device 111b, and is capable of switching a light 111g (see FIG. 1) between on and off. The light switch 111b1 is, for example, a seesaw switch. The traveling manipulator 111b2 is disposed in an upper portion of the in-vehicle operation device 111b. A configuration of the traveling manipulator 111b2 will be described later.

The setting manipulator 111b3 is disposed on the front side of the in-vehicle operation device 111b, and is constituted by a touch panel. The setting manipulator 111b3 displays various types of information of the work vehicle 1 (the traveling machine body 11, the work machine 12, and the remote operation device 200) and enables various types of settings of the work vehicle 1. That is, a screen (image) for displaying the various types of information or a screen (image) for performing the various types of setting are displayed on the setting manipulator 111b3.

Note that the setting manipulator 111b3 is not limited to the above-described configuration. For example, the setting manipulator 111b3 may be configured by a switch, a dial, a lever, or the like. Furthermore, in order to display various types of information, a display different from the setting manipulator 111b3 may be installed in the in-vehicle operation device 111b.

The various settings include a setting for switching operation modes (a first operation mode and a second operation mode) of the traveling machine body 11. The operation mode switching setting is performed by operating the switching manipulator 111b4 (also referred to as a switching operation screen) displayed on the setting manipulator 111b3. In this embodiment, the switching manipulator 111b4 includes a screen (image) displayed on the setting manipulator 111b3. Furthermore, as described above, the setting manipulator 111b3 is disposed in the in-vehicle operation device 111b, and the in-vehicle operation device 111b is installed in the traveling machine body 11. Specifically, the work vehicle 1 includes the switching manipulator 111b4, and the switching manipulator 111b4 is installed in the traveling machine body 11. Hereinafter, a configuration (screen configuration) of the switching manipulator 111b4 will be described.

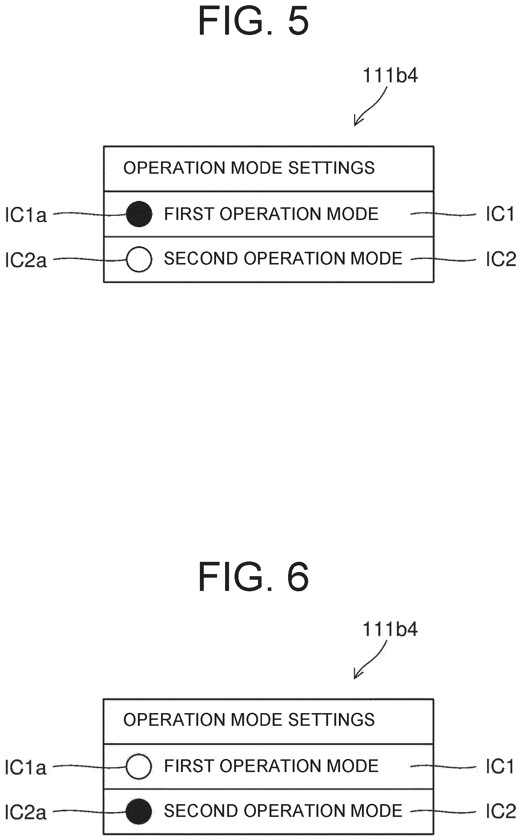

FIGS. 5 and 6 are diagrams illustrating a configuration of the switching manipulator 111b4. Note that, in FIGS. 5 and 6, in a first operation mode display icon IC1a and a second operation mode display icon IC2a which will be described later, white filling (not filling) indicates turn-off and black filling indicates turn-on (or blinking).

The switching manipulator 111b4 includes a first operation mode setting icon IC1 and a second operation mode setting icon IC2. Furthermore, the first operation mode setting icon IC1 includes the first operation mode display icon IC1a, and the second operation mode setting icon IC2 includes the second operation mode display icon IC2a.

The first operation mode setting icon IC1 enables a setting of the first operation mode. The first operation mode display icon IC1a is turned on (or blinks) when the first operation mode is set (in the work vehicle 1) (see FIG. 5 in particular). On the other hand, the first operation mode display icon IC1a is turned off when the first operation mode is not set, that is, when the second operation mode is set (in the work vehicle 1) (see FIG. 6 in particular).

The second operation mode setting icon IC2 enables a setting of the second operation mode. The second operation mode display icon IC2a is turned on (or blinks) when the second operation mode is set (in the work vehicle 1) (see FIG. 6 in particular). On the other hand, the second operation mode display icon IC2a is turned off when the second operation mode is not set, that is, when the first operation mode is set (in the work vehicle 2) (see FIG. 5 in particular).

In this embodiment, the switching manipulator 111b4 for performing a switching setting of the operation mode includes a screen displayed on the setting manipulator 111b3, but is not limited to this configuration. For example, the switching manipulator 111b4 may be disposed separately from the setting manipulator 111b3. Furthermore, the switching manipulator 111b4 may be a switch, a dial, a lever, or the like.

### 4. Configuration of Control System of Work Vehicle

A configuration of a control system of the work vehicle 1 will be described with reference to FIG. 7. FIG. 7 is a block diagram schematically illustrating a configuration of a control system of the work vehicle 1. Note that, in FIG. 7, components required to describe the features of this embodiment are illustrated, and common components are not illustrated.

The traveling machine body 11 includes the control device 113. In particular, the control device 113 is installed in the machine body portion 111 of the traveling machine body 11. The control device 113 is, for example, a computer device that is configured to include an arithmetic device, an input/output portion, and a storage 113a. The arithmetic device is, for example, a processor or a microprocessor. The storage 13a is a main storage device, such as a read only memory (ROM) or a random access memory (RAM). The storage 113a may further include an auxiliary storage device, such as a hard disk drive (HDD) or a solid state drive (SSD). The storage 113a stores various types of program, data, and the like. The arithmetic device reads out the various types of program from the storage 113a and executes arithmetic processing in accordance with the programs. The programs stored in the storage 113a may be provided by, for example, a computer-readable non-volatile recording medium. As another example, the programs may be provided from a program providing server via a communication line, such as the Internet.

The control device 113 may be operated as an operation mode switcher 113b, a traveling controller 113c, a work machine controller 113d, and a notification controller 113e by cooperation of the above-described hardware and software. The control device 113 may be configured by a single piece of hardware, or may be configured by a plurality of pieces of hardware that can communicate with each other.

Note that, as described above, the functional portions 113b to 113e included in the control device 113 may be realized by causing the arithmetic device to execute arithmetic processing in accordance with the programs, that is, by software, but may be realized by another method. At least one of the functional portions 113b to 113e may be implemented using, for example, an application specific integrated circuit (ASIC), a field programmable gate array (FPGA), or the like. That is, at least one of the functional portions 113b to 113e may be realized by hardware using a dedicated IC or the like. Moreover, at least one of the functional portions 113b to 113e may be realized by using both software and hardware. In addition, each of the functional portions 113b to 113e has a conceptual configuration. Therefore, a function executed by one component may be distributed to a plurality of components, or functions of a plurality of components may be integrated into one component.

The operation mode switcher 113b controls switching between a first operation mode and a second operation mode based on a switching instruction (setting instruction) issued by the switching manipulator 111b4. A flow of the operation mode switching setting will be described later.

The traveling controller 113c controls the traveling drive device 111c (see FIG. 1) in accordance with whether the work vehicle 1 is set to the first operation mode or the second operation mode. Functions of the traveling controller 113c in the individual operation modes will be described later.

The work machine controller 113d controls the work machine drive device 111d (see FIG. 1) and the work machine lifting device 111e (see FIGS. 1 and 2) in accordance with whether the work vehicle 1 is set to the first operation mode or the second operation mode. Functions of the work machine controller 113d in the individual operation modes will be described later.

When the work vehicle 1 is set to the second operation mode, the notification controller 113e drives (sounds) the notifier 111f (a speaker in this embodiment) based on a traveling direction of the traveling machine body 11.

A positioning communication unit 114, a communication processor 115, and a sensor 116 are connected to the control device 113. Note that the traveling manipulator 111b2 and the setting manipulator 111b3 are also connected to the control device 113.

The positioning communication unit 114 includes the positioning antenna 111h (see FIG. 1) and acquires a position of the vehicle main body 10 as information on latitudes and longitudes, for example, by using a positioning signal received by the positioning antenna 111h from a positioning satellite. For example, the positioning communication unit 114 receives a positioning signal from a reference station, not illustrated, by an appropriate method, and then performs positioning by using a known real time kinematic GNSS (RTK-GNSS) method. The positioning communication unit 114 outputs positional information of the vehicle main body 10 to the control device 113. The positioning communication unit 114 may perform positioning by using another method, for example, a differential GNSS (DGNSS) method. Furthermore, the work vehicle 1 may include, for example, a quantum compass capable of performing positioning, instead of or in addition to the positioning communication unit 114.

The communication processor 115 performs communication with the remote operation device 200 via a communication antenna 115a. The communication antenna 115a is used to perform wireless communication with the remote operation device 200. As the wireless communication, wireless Local Area Network (LAN), such as Wi-Fi (registered trademark), may be used.

The sensor 116 detects information related to the vehicle main body 10 and outputs the detected information to the control device 113. In this embodiment, the sensor 116 includes a plurality of types of sensor. Each of the plurality of types of sensor is connected to the control device 113 so as to be able to input a signal. Examples of the plurality of types of sensor include an inertial measurement device, an obstacle sensor, a speed sensor, and a lifting position sensor.

The inertial measurement device includes a tri-axial angular velocity sensor and a tri-directional acceleration sensor and can measure an attitude of the vehicle main body 10. The obstacle sensor detects an obstacle existing around the vehicle main body 10, and may be, for example, an ultrasonic sensor, a camera, a radar, or light detection and ranging (LiDAR). The speed sensor detects a speed V (see FIG. 11) of the traveling machine body 11. The lifting position sensor detects a lifting position (height from the ground) of the work machine 12.

Note that the positioning communication unit 114 and some of the sensors 116 (for example, the inertial measurement device) are used when the work vehicle 1 automatically travels. That is, the positioning communication unit 114 and some of the sensors 116 are not essential for the work vehicle 1 to travel based on an instruction issued from the remote operation device 200 or the in-vehicle operation device 111b.

### 5. Operation of Traveling Machine Body in First Operation Mode and Second Operation Mode

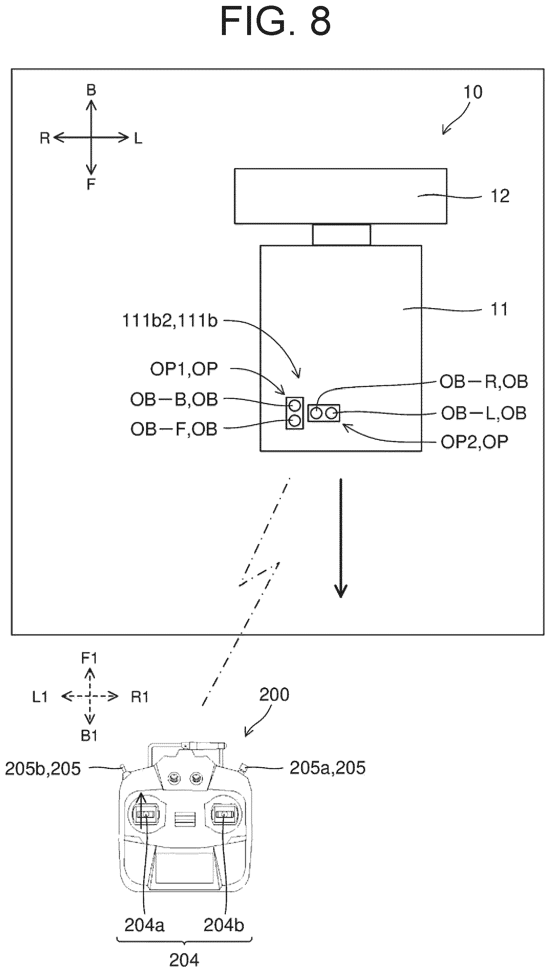

Operations of the traveling machine body 11 in the first operation mode and the second operation mode will be described. First, the operation of the traveling machine body 11 in the first operation mode will be described with reference to FIG. 8.

FIG. 8 is an explanatory view illustrating the operation of the traveling machine body 11 in the first operation mode.

In the first operation mode, when the first operation lever 204a of the remote operation device 200 is tilted in the F1 direction, the traveling machine body 11 can be moved forward. More specifically, a forward movement instruction is output from the remote operation device 200 by tilting the first operation lever 204a in the F1 direction. The forward movement instruction is transmitted to the control device 113 via the communication antenna 115a and the communication processor 115 (see FIG. 7). In the control device 113, the traveling controller 113c controls the traveling drive device 111c (in particular, the electric motor) to set an output (rotational output) of the traveling drive device 111c to a rotational speed and a direction corresponding to the forward movement instruction. Thus, the traveling portion 112 (see FIG. 1) is driven, and the traveling machine body 11 moves forward. Note that, as described above, since the work machine 12 is attached to the traveling machine body 11 via the hitch portion 13, when the traveling machine body 11 moves forward, the work machine 12 also moves forward.

Similarly, in the first operation mode, when the first operation lever 204a is tilted in the B1 direction, the traveling machine body 11 can be moved backward. In the first operation mode, when the first operation lever 204a is tilted in the L1 direction, the traveling machine body 11 can be turned to the left. In the first operation mode, when the first operation lever 204a is tilted in the R1 direction, the traveling machine body 11 can be turned to the right.

In the first operation mode, when the second operation lever 204b of the remote operation device 200 is tilted in the L1 direction, the traveling machine body 11 can be turned to the left. In the first operation mode, when the second operation lever 204b is tilted in the R1 direction, the traveling machine body 11 can be turned to the right.

Note that a turning radius (turning amount) obtained when the operation is performed with the same operation amount (operation amount from the neutral position) differs between the turning by the first operation lever 204a (right turning and left turning) and the turning by the second operation lever 204b (right turning and left turning). More specifically, when the first operation lever 204a and the second operation lever 204b are tilted by the same amount from a neutral position, the traveling machine body 11 can be turned with a larger turning radius when being operated by the second operation lever 204b than when being operated by the first operation lever 204a. In other words, the traveling machine body 11 can be gently turned by the second operation lever 204b. Note that the configurations of the first operation lever 204a and the second operation lever 204b are not limited to the above, and for example, a configuration may be adopted in which the traveling machine body 11 can be gently turned by the first operation lever 204a relative to the second operation lever 204b.

In the first operation mode, when the second operation lever 204b is tilted in the F1 direction, the work machine 12 can be lifted. In the first operation mode, when the second operation lever 204b is tilted in the B1 direction, the work machine 12 can be lowered. More specifically, by tilting the second operation lever 204b in the F1 direction (B1 direction), an instruction to lift (instruction to lower) the work machine 12 is output from the remote operation device 200. This instruction is transmitted to the control device 113 via the communication antenna 115a and the communication processor 115. In the control device 113, the work machine controller 113d controls the work machine lifting device 111e such that the work machine 12 is lifted (lowered). Specifically, the work machine controller 113d starts driving of the hydraulic pump 111e1 and controls the directional control valve 111e2 to supply hydraulic oil in a direction and at a flow rate corresponding to the instruction to the lifting cylinder 111e3. As a result, the lifting cylinder 111e3 is extended (contracted) and the work machine 12 is lifted (lowered).

Furthermore, in the first operation mode, when the first operation switch 205a is pressed, a plurality of types of setting related to automatic traveling can be performed. The plurality of types of setting include, for example, a start setting and an end setting of the automatic traveling. That is, in the first operation mode, when the first operation switch 205a is pressed, the automatic traveling can be started or ended.

In the first operation mode, when the second operation switch 205b is operated, it is possible to perform switching between a state in which power transmission to the work machine 12 using the above-described PTO power transmission portion is possible and a state in which the power transmission is not possible. That is, the work machine 12 can be driven or stopped. The work machine 12 is driven and stopped by the work machine controller 113d of the control device 113 controlling the work machine drive device 111d (in particular, the electric motor as the drive source) based on an operation (instruction) issued by the second operation switch 205b.

Therefore, in the first operation mode, the traveling machine body 11 can travel, the work machine lifting device 111e can be driven (the work machine 12 can be lifted and lowered), and the work machine drive device 111d can be driven (the work machine 12 can be driven) by operating the remote operation device 200. That is, in the first operation mode, the traveling machine body 11 can be operated using the remote operation device 200.

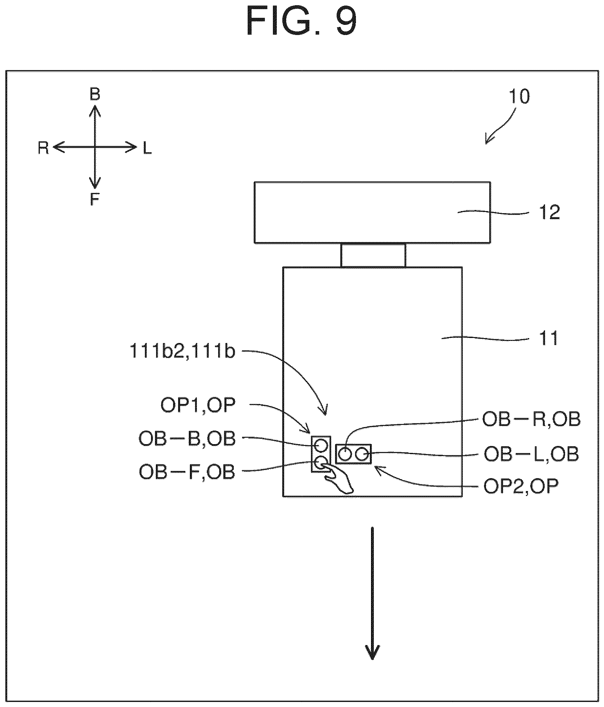

Next, the operation of the traveling machine body 11 in the second operation mode will be described with reference to FIG. 9. FIG. 9 is an explanatory view illustrating the operation of the traveling machine body 11 in the second operation mode. First, a configuration of the traveling manipulator 111b2 of the in-vehicle operation device 111b for operating the traveling machine body 11 in the second operation mode will be described.

In this embodiment, the traveling manipulator 111b2 includes two operation members OP. The two operation members OP are arranged side by side in the right-left direction. Here, the operation member OP positioned on the right side is referred to as a first operation member OP1, and the operation member OP positioned on the left side is referred to as a second operation member OP2. Each of the operation members OP includes two operation buttons OB. The operation buttons OB are, for example, momentary push buttons.

In the first operation member OP1, the two operation buttons OB are arranged side by side in the front-back direction. Here, in the first operation member OP1, of the two operation buttons OB, the operation button OB positioned on the front side is referred to as a forward movement operation button OB-F, and the operation button OB positioned on the back side is referred to as a backward movement operation button OB-B.

In the second operation member OP2, two operation buttons OB are arranged side by side in the right-left direction. Here, in the second operation member OP2, of the two operation buttons OB, the operation button OB positioned on the left side is referred to as a left turning operation button OB-L, and the operation button OB positioned on the right side is referred to as a right turning operation button OB-R.

Note that the traveling manipulator 111b2 is not limited to the above-described configuration, and may be configured by, for example, a switch, a dial, a lever, or the like. Alternatively, the traveling manipulator 111b2 may be configured by a touch panel. That is, the traveling manipulator 111b2 may include a screen displayed on the setting manipulator 111b3.

In the second operation mode, when the forward movement operation button OB-F is pressed, the traveling machine body 11 can be moved forward. More specifically, when the forward movement operation button OB-F is pressed, a forward movement instruction is output from the in-vehicle operation device 111b (traveling manipulator 111b2). The forward movement instruction is transmitted to the control device 113 (see FIG. 7). In the control device 113, the traveling controller 113c controls the traveling drive device 111c (in particular, the electric motor) to set an output (rotational output) of the traveling drive device 111c to a rotational speed and a direction corresponding to the forward movement instruction. As a result, the traveling portion 112 is driven, and the traveling machine body 11 moves forward. Note that, in the second operation mode, a speed of the traveling machine body 11 is limited. The speed limit of the traveling machine body 11 will be described later.

Similarly, in the second operation mode, when the backward movement operation button OB-B is pressed, the traveling machine body 11 can be moved backward. In the second operation mode, when the left turning operation button OB-L is pressed, the traveling machine body 11 can be turned left. In the second operation mode, when the right turning operation button OB-R is pressed, the traveling machine body 11 can be turned right. That is, (particularly in the second operation mode), the traveling manipulator 111b2 can issue a traveling instruction to the traveling machine body 11.

Note that one of the left turning operation button OB-L and the right turning operation button OB-R may be pressed together with one of the forward movement operation button OB-F and the backward movement operation button OB-B. For example, in the second operation mode, when the left turning operation button OB-L is pressed together with the forward movement operation button OB-F, the traveling machine body 11 can be turned left while being moved forward.

Therefore, in the second operation mode, the traveling machine body 11 can be caused to travel by operating the in-vehicle operation device 111b (particularly, the traveling manipulator 111b2). That is, in the second operation mode, the traveling machine body 11 can be operated using the in-vehicle operation device 111b.

According to the above configuration, when the work vehicle 1 is set to the first operation mode in a state where the traveling machine body 11 can be operated by the remote operation device 200, the traveling machine body 11 can be operated by the remote operation device 200. Therefore, the operator can easily move the traveling machine body 11 by operating the remote operation device 200 (by setting the work vehicle 1 to the first operation mode). On the other hand, for example, even when the traveling machine body 11 may not be operated by the remote operation device 200 due to a failure, power shortage, or the like of the remote operation device 200, the traveling machine body 11 can be operated by the in-vehicle operation device 111b by setting the work vehicle 1 to the second operation mode. Therefore, even in the above case, the operator can easily move the traveling machine body 11 by operating the in-vehicle operation device 111b (by setting the work vehicle 1 to the second operation mode). As described above, it is possible to easily move the traveling machine body 11 in both the state in which the operation of the traveling machine body 11 by the remote operation device 200 is possible and the state in which the operation is impossible.

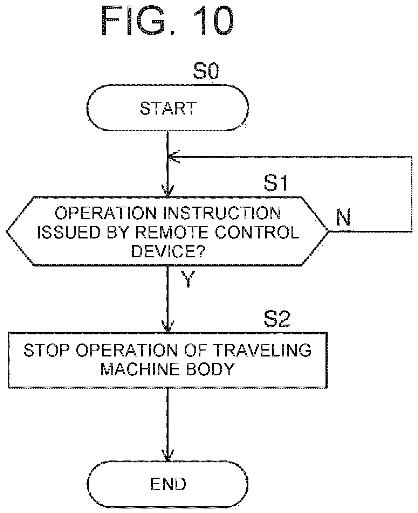

Note that, in the second operation mode, even when at least one of the first operation lever 204a, the second operation lever 204b, the first operation switch 205a, and the second operation switch 205b of the remote operation device 200 is operated, the traveling machine body 11 does not move (does not operate). That is, in the second operation mode, the traveling machine body 11 is prohibited from being operated using the remote operation device 200. More details are as follows. FIG. 10 is a flowchart of a flow when an operation instruction is issued by the remote operation device 200 in the second operation mode. In step S0, it is assumed that the work vehicle 1 is set to the second operation mode and the operation of the traveling machine body 11 is stopped.

In step S1, the traveling controller 113c and the work machine controller 113d determine whether an instruction for operating the traveling machine body 11 has been issued by the remote operation device 200. In this embodiment, as described above, the operation instruction is realized by operating at least one of the first operation lever 204a, the second operation lever 204b, the first operation switch 205a, and the second operation switch 205b of the remote operation device 200. For example, the forward movement instruction of the traveling machine body 11 is realized by tilting the first operation lever 204a in the F1 direction. Furthermore, an instruction for lifting the work machine 12 (an instruction for driving the work machine lifting device 111e) is realized by tilting the second operation lever 204b in the F1 direction. Furthermore, by tilting the second operation lever 204b in the F1 direction while tilting the first operation lever 204a in the F1 direction, an instruction for moving the traveling machine body 11 forward and an instruction for lifting the work machine 12 are realized.

When an operation instruction has been issued (Yes in step S1), the process proceeds to next step S2. When an operation instruction has not been issued (No in step S1), the traveling controller 113c and the work machine controller 113d continue to determine the operation instruction.

In step S2, when the operation instruction is a travel instruction (a forward movement instruction, a backward movement instruction, a right turn instruction, or a left turn instruction), the traveling controller 113c controls the traveling drive device 111c to stop the operation of the traveling machine body 11 (keep the traveling machine body 11 stopped). For example, when a forward movement instruction of the traveling machine body 11 is issued (an operation of the first operation lever 204a in the F1 direction), the traveling controller 113c controls the electric motor of the traveling drive device 111c against the forward movement instruction so that a rotational speed of an output of the electric motor becomes zero. Accordingly, the traveling of the traveling machine body 11 continues to be stopped.

Furthermore, when a backward movement instruction (operation of the first operation lever 204a in the B1 direction), a left turn instruction (operation of the first operation lever 204a and the second operation lever 204b in the L1 direction), and a right turn instruction (operation of the first operation lever 204a and the second operation lever 204b in the R1 direction) of the traveling machine body 11 are issued, the traveling of the traveling machine body 11 continues to be stopped similarly to the case of the forward movement instruction. Note that the same applies to a case where an automatic traveling start instruction (pressing of the first operation switch 205a) is issued as the case where forward movement instruction is issued.

Furthermore, when the operation instruction is an instruction for lifting or lowering the work machine 12, the work machine controller 113d controls the work machine lifting device 111e to stop (continue to stop) the operation of the traveling machine body 11. For example, when an instruction for lifting the work machine 12 (operation of the second operation lever 204b in the F1 direction) is issued, the work machine controller 113d controls at least one of the hydraulic pump 111e1 and the directional control valve 111e2 so that supply of hydraulic oil to the lifting cylinder 111e3 is blocked, contrary to the lifting instruction. More specifically, at least one of stopping of driving of the hydraulic pump 111e1 and blocking of a flow path by the directional control valve 111e2 is performed. As a result, in the traveling machine body 11, driving of the work machine lifting device 111e, that is, lifting and lowering of the work machine 12, continues to be stopped. Note that, also in a case where a lowering instruction of the work machine 12 is issued (operation of the second operation lever 204b in the B1 direction), similarly to a case where a lifting instruction is issued, in the traveling machine body 11, the driving of the work machine lifting device 111e continues to be stopped.

Furthermore, when the operation instruction is an instruction for driving the work machine 12, the work machine controller 113d controls the work machine drive device 111d to stop the operation of the traveling machine body 11 (keep the traveling machine body 11 stopped). For example, when a drive instruction for the work machine 12 is issued (pressing of the second operation switch 205b), the work machine controller 113d controls the electric motor of the work machine drive device 111d against the drive instruction so that the rotational speed of the electric motor becomes zero. As a result, in the traveling machine body 11, the driving of the work machine drive device 111d, that is, the driving of the work machine 12, continues to be stopped.

When the work vehicle 1 is set to the second operation mode, the operator is often positioned near the in-vehicle operation device 111b, that is, near the traveling machine body 11, in order to operate the traveling machine body 11 using the in-vehicle operation device 111b. In this case, for example, when the operation of the traveling machine body 11 by the remote operation device 200 is changed (returned) from a disabled state to an enabled state and a worker other than the operator erroneously operates the remote operation device 200, the traveling machine body 11 and the operator may come into contact with each other. In addition, the operator may come into contact with not only the traveling machine body 11 itself but also the work machine 12 that operates (drives, moves up and down) in conjunction with the operation of the traveling machine body 11. Therefore, the following configuration is desirable from the viewpoint of ensuring the safety of the work vehicle 1 in the second operation mode even when the operation of the traveling machine body 11 by the remote operation device 200 is changed from the disabled state to the enabled state. That is, as in this embodiment, it is desirable to prohibit the traveling machine body 11 from being operated by using the remote operation device 200 in the second operation mode.

Note that, in the first operation mode, the traveling machine body 11 is prohibited from being operated using the in-vehicle operation device 111b, but may be allowed to be operated.

Here, speed limitation of the traveling machine body 11 in the second operation mode will be described. Hereinafter, as an example of the speed limitation of the traveling machine body 11 in the second operation mode, a case where the traveling machine body 11 moves forward will be described. However, the same applies to cases where the traveling machine body 11 moves backward and turns (turns to the left and turns to the right).

FIG. 11 is a graph illustrating a change in a target speed Vt of the traveling machine body 11 in the second operation mode with respect to an operation amount X of the forward movement operation button OB-F. Note that FIG. 11 also illustrates a change in the target speed Vt of the traveling machine body 11 in the first operation mode with respect to an operation amount Y of the first operation lever 204a in the F1 direction. In FIG. 11, a solid line indicates a change in the target speed Vt of the traveling machine body 11 with respect to the operation amount X, and a broken line indicates a change in the target speed Vt of the traveling machine body 11 with respect to the operation amount Y.

Note that the operation amount X of the forward movement operation button OB-F (see FIG. 9) means a pressing amount from a neutral state (non-operation state). For example, when the forward movement operation button OB-F is completely pressed (fully pressed), the operation amount X is 100%. Furthermore, the operation amount Y of the first operation lever 204a means a tilting amount from the neutral state (non-operation state). For example, the operation amount Y is 100% when the first operation lever 204a is completely tilted (fully tilted) in the F1 direction. Furthermore, the target speed Vt means a target speed when the traveling controller 113c controls the traveling drive device 111c to cause the traveling machine body 11 to travel. That is, the traveling controller 113c controls the traveling drive device 111c so that an (actual) speed V of the traveling machine body 11 coincides with the target speed Vt. Therefore, the target speed Vt corresponds to the (actual) speed V of the traveling machine body 11.

In the first operation mode, the target speed Vt of the traveling machine body 11 changes with the operation amount Y of the first operation lever 204a (see the broken line in FIG. 11). More specifically, when the operation amount Y increases, the target speed Vt also increases, that is, the speed V of the traveling machine body 11 also increases. For example, when the operation amount Y is 100% (when the first operation lever 204a is fully tilted in the F1 direction), the target speed Vt becomes a maximum speed Vmax (for example, 15 km/h), and the traveling machine body 11 travels at the maximum speed Vmax. Note that, as described above, the maximum speed Vmax can be adjusted by the operation knobs 206 (see FIG. 3) of the remote operation device 200. Here, in the first operation mode, a range of the speed V in which the traveling machine body 11 can travel is referred to as a speed range SR. In addition, in the speed range SR, a range exceeding a speed threshold value Va (for example, 5km/h) is referred to as a high speed range SR-H, and a range equal to or less than the speed threshold value Va is referred to as a low speed range SR-L.

In the second operation mode, the target speed Vt of the traveling machine body 11 is constant at a speed limit Vlim (for example, 3 km/h) when the operation amount X of the forward movement operation button OB-F is equal to or greater than an operation amount threshold value Xa (for example, 90%) (see the solid line in FIG. 11). For example, when the forward movement operation button OB-F is completely pressed, the target speed Vt becomes the speed limit Vlim, and the traveling machine body 11 travels at the speed limit Vlim. The speed limit Vlim is, for example, a preset fixed value. More specifically, the speed limit Vlim is set within the range of the low speed range SR-L (that is, less than the speed threshold value Va), and is stored in the storage 113a. That is, in the second operation mode, the speed V of the traveling machine body 11 is limited to the low speed range SR-L.

Note that the change in the target speed Vt of the traveling machine body 11 in the second operation mode with respect to the operation amount X is not limited to the above. For example, the target speed Vt of the traveling machine body 11 in the second operation mode may change together with the operation amount X. However, the target speed Vt preferably changes within the low speed range SR-L. Furthermore, the operation amount threshold value Xa is not limited to 90%, and may be, for example, 80% or 100%. Furthermore, the speed limit Vlim is not limited to a fixed value and may be, for example, a variable value. That is, the speed limit Vlim may be adjustable similarly to the maximum speed Vmax. However, the speed limit Vlim is preferably adjustable within the low speed range SR-L.

The speed V of the traveling machine body 11 in the case where the speed V of the traveling machine body 11 in the second operation mode is set within the low speed range SR-L is lower than the speed V of the traveling machine body 11 in the case where the speed V is set within the high speed range SR-H. Thus, for example, even when the traveling machine body 11 approaches, the operator can easily perform an operation for avoiding a collision with the traveling machine body 11. Therefore, from the viewpoint of improving safety during movement of the traveling machine body 11 in the second operation mode, the following configuration is desirable. That is, as in this embodiment, in the second operation mode, the speed V of the traveling machine body 11 is desirably limited to the low speed range SR-L in the speed range SR of the traveling machine body 11 in the first operation mode.

### 6. Operation Mode Switching Setting

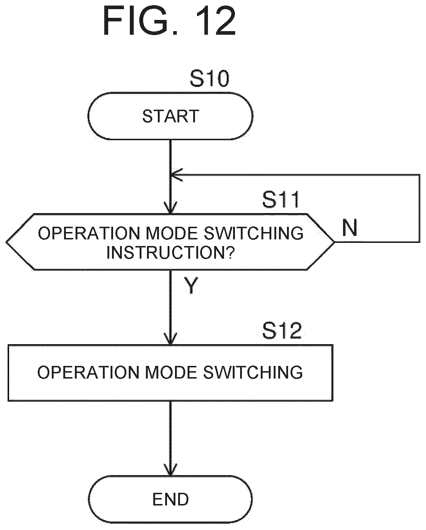

A setting of switching between the first operation mode and the second operation mode will be described with reference to FIG. 12. FIG. 12 is a flowchart illustrating a flow of a setting of switching between the operation modes. It is assumed that the first operation mode is set as the operation mode in step S10.

In step S11, the operation mode switcher 113b (see FIG. 7) determines whether an operation mode switching instruction has been issued. In this embodiment, the switching instruction is realized by the operator operating (touching) the second operation mode setting icon IC2 (see FIG. 6) of the switching manipulator 111b4 with a finger or the like. When the switching instruction has been issued (Yes in step S11), the processing proceeds to next step S12. When the switching instruction has not been issued (No in step S11), the operation mode switcher 113b continues the determination of the switching instruction.

In step S12, the operation mode switcher 113b switches the operation mode from the first operation mode to the second operation mode. Thus, the operation mode is set to the second operation mode. That is, the switching manipulator 111b4 enables switching from the first operation mode to the second operation mode. As described above, when the operation mode is set to the second operation mode, the second operation mode display icon IC2a of the switching manipulator 111b4 is turned on (or blinked) (see FIG. 6).

For example, the following configuration is desirable from the viewpoint of reliably performing switching from the first operation mode to the second operation mode even when a failure, power shortage, or the like occurs in the remote operation device 200. That is, as illustrated in FIG. 4, in a configuration in which the work vehicle 1 includes the switching manipulator 111b4 that enables switching from the first operation mode to the second operation mode, it is desirable that the switching manipulator 111b4 be provided in the traveling machine body 11.

Note that the switching instruction (from the first operation mode to the second operation mode) is not limited to the above-described configuration. For example, the switching instruction may be realized by the operator continuously pressing the forward movement operation button OB-F of the traveling manipulator 111b2 for a predetermined period of time (for example, one second) instead of (or in addition to) the operation of the switching manipulator 111b4 (particularly, the second operation mode setting icon IC2). That is, the traveling manipulator 111b2 may be capable of issuing a traveling instruction to the traveling machine body 11 and performing switching from the first operation mode to the second operation mode.

In addition, for example, the switching instruction may be realized by the operator continuously pressing the operation button OB other than the forward movement operation button OB-F included in the traveling manipulator 111b2 for a predetermined period of time. That is, the switching instruction may be realized by the operator continuously pressing any one of the backward movement operation button OB-B, the left turning operation button OB-L, and the right turning operation button OB-R for a predetermined period of time. Alternatively, the switching instruction may be realized by pressing at least two of the forward movement operation button OB-F, the backward movement operation button OB-B, the left turning operation button OB-L, and the right turning operation button OB-R together, or by continuously pressing them for a predetermined period of time.

In order to reduce the burden of the setting work on the operator, it is desirable to reduce the number of manipulators for the setting work (setting operation) in the work vehicle 1. From this viewpoint, as in this modification, in the configuration in which the in-vehicle operation device 111b includes the traveling manipulator 111b2, it is desirable that the traveling manipulator 111b2 enables switching from the first operation mode to the second operation mode.

Note that, in step S10, the operation mode may be set to the second operation mode. In this case, the operation mode is switched from the second operation mode to the first operation mode by the switching setting described above. The switching instruction in this case is realized by operating the first operation mode setting icon IC1 (see FIG. 5) of the switching manipulator 111b4. That is, the switching manipulator 111b4 enables switching from the second operation mode to the first operation mode in addition to the switching from the first operation mode to the second operation mode.

### 7. Notification Timing of Notifier

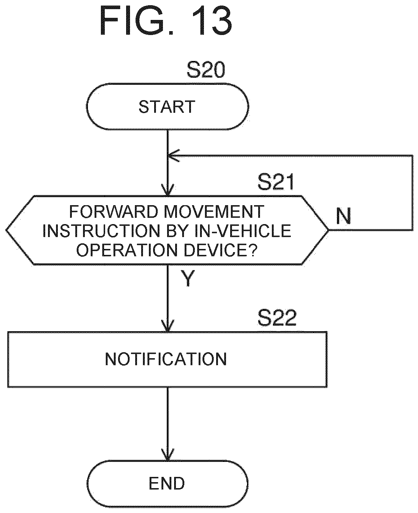

A timing at which the notifier 111f (see FIGS. 1 and 7) performs notification will be described with reference to FIG. 13. FIG. 13 is a flowchart of a flow when the notifier 111f performs notification. It is assumed that the second operation mode is set as the operation mode in step S20.

In step S21, the notification controller 113e (see FIG. 7) determines whether a forward movement instruction for the traveling machine body 11 has been issued by the in-vehicle operation device 111b. As described above, in this embodiment, the forward movement instruction is realized by the operator operating the forward movement operation button OB-F of the in-vehicle operation device 111b. When the forward movement instruction has been issued (Yes in step S21), the process proceeds to next step S22. When the forward movement instruction has not been issued (No in step S21), the notification controller 113e continues to determine whether the forward movement instruction has been issued.

In step S22, the notification controller 113e controls the notifier 111f (speaker) to make a notification (sound). That is, in the second operation mode, the notifier 111f makes a notification when the traveling machine body 11 moves to one side in one direction (in this embodiment, the front side in the front-back direction).

When the work vehicle 1 is set to the second operation mode in a configuration in which the in-vehicle operation device 111b is disposed on one side (the front side in the front-back direction in this embodiment) in one direction included in the horizontal direction in the traveling machine body 11, the operator is often positioned as follows. That is, the operator is often positioned on one side in one direction (in this embodiment, the front side in the front-back direction) with respect to the traveling machine body 11 in order to operate the traveling machine body 11 by using the in-vehicle operation device 111b. In this case, for example, when the operator erroneously (unintentionally) moves the traveling machine body 11 to one side in one direction (moves forward in this embodiment), the traveling machine body 11 may approach the operator and come into contact with the operator. Therefore, even when the operator makes a mistake in operation, it is desirable to make the operator recognize the approach of the traveling machine body 11 in order to avoid contact between the operator and the traveling machine body 11. From this point of view, as in this embodiment, it is desirable that the notifier 111f performs notification when the traveling machine body 11 moves to one side in one direction in the second operation mode.

### 8. Appendices

The work vehicle 1 described in this embodiment can also be expressed as a work vehicle described in the following appendices.

A work vehicle according to Appendix 1, comprising:
a traveling machine body;
an in-vehicle operation device that is installed in the traveling machine body and that operates the traveling machine body; and
a remote operation device that is provided separately from the traveling machine body and that operates the traveling machine body, wherein
the work vehicle has
   a first operation mode for operating the traveling machine body using the remote operation device, and
   a second operation mode for operating the traveling machine body using the in-vehicle operation device.

A work vehicle according to Appendix 2, wherein, in the work vehicle according to Appendix 1,
in the second operation mode, the traveling machine body is prohibited from being operated using the remote operation device.

A work vehicle according to Appendix 3, in the work vehicle according to Appendix 1 or 2, further comprising:
a switching manipulator capable of performing switching from the first operation mode to the second operation mode, wherein
the switching manipulator is disposed in the traveling machine body.

A work vehicle according to Appendix 4, in the work vehicle according to Appendix 1 or 2, the in-vehicle operation device including:
a traveling manipulator capable of issuing a traveling instruction to the traveling machine body, wherein
the traveling manipulator is capable of performing switching from the first operation mode to the second operation mode.

A work vehicle according to Appendix 5, in the work vehicle according to any one of Appendices 1 to 4, further comprising:
a notifier, wherein
the in-vehicle operation device is disposed on one side in one direction included in a horizontal direction in the traveling machine body, and
the notifier makes a notification when the traveling machine body moves to the one side in the one direction in the second operation mode.

A work vehicle according to Appendix 6, wherein, in the work vehicle according to any one of Appendices 1 to 5,
in the second operation mode, a speed of the traveling machine body is limited to a low speed range in a speed region of the traveling machine body in the first operation mode.

The embodiments of the present invention have been described above, but the scope of the present invention is not limited thereto, and may be expanded or modified without departing from the gist of the invention.

### INDUSTRIAL APPLICABILITY

The present invention is applicable to work vehicles, such as an agricultural machine and a construction machine.

### REFERENCE SIGNS LIST

1 work vehicle
11 traveling machine body
111b in-vehicle operation device
111b2 traveling manipulator
111b4 switching manipulator
111f notifier
200 remote operation device
V speed (speed of traveling machine body)
SR speed range
SR-L low speed range

## Claims

1. A work vehicle, comprising:
a traveling machine body;
an in-vehicle operation device that is installed in the traveling machine body and that operates the traveling machine body; and
a remote operation device that is provided separately from the traveling machine body and that operates the traveling machine body, wherein
the work vehicle has
a first operation mode for operating the traveling machine body using the remote operation device, and
a second operation mode for operating the traveling machine body using the in-vehicle operation device.

2. The work vehicle according to claim 1, wherein in the second operation mode, the traveling machine body is prohibited from being operated using the remote operation device.

3. The work vehicle according to claim 1, further comprising:
a switching manipulator capable of performing switching from the first operation mode to the second operation mode, wherein
the switching manipulator is disposed in the traveling machine body.

4. The work vehicle according to claim 1, the in-vehicle operation device including:
a traveling manipulator capable of issuing a traveling instruction to the traveling machine body, wherein
the traveling manipulator is capable of performing switching from the first operation mode to the second operation mode.

5. The work vehicle according to claim 1, further comprising:
a notifier, wherein
the in-vehicle operation device is disposed on one side in one direction included in a horizontal direction in the traveling machine body, and
the notifier makes a notification when the traveling machine body moves to the one side in the one direction in the second operation mode.

6. The work vehicle according to any one of claims 1 to 5, wherein, in the second operation mode, a speed of the traveling machine body is limited to a low speed range in a speed region of the traveling machine body in the first operation mode.
